# EUROPÄISCHE PATENTANMELDUNG

(11) **EP 3 499 077 A1**
(43) Veröffentlichungstag der Anmeldung: **19.06.2019**
(21) Anmeldenummer: 18200052.1
(22) Anmeldetag: 12.10.2018
(51) Int. Cl.: F16F 1/38

(54) **HÜLSENLAGER**

(30) Priorität: 14.12.2017 DE 102017129921
(71) Anmelder: CLAAS Selbstfahrende Erntemaschinen GmbH, 33428 Harsewinkel (DE)
(72) Erfinder: Lehmberg, Andreas, 33428 Harsewinkel (DE)
(74) Vertreter: CLAAS Gruppe

(57) **Zusammenfassung**

Die vorliegende Erfindung betrifft ein Hülsenlager (1), welches eine Außenhülse (2) und eine Innenhülse (4) aufweist, zwischen denen zumindest eine Dämpfungsschicht (3) angeordnet ist, die aus wenigstens einem Elastomer besteht, wobei eine Stirnfläche (5) des zumindest einen Hülsenlagers (1) einsehbar ist, wobei in zumindest einem Abschnitt (6) des die zumindest eine Dämpfungsschicht (3) bildendenden Elastomers ein Indikatormittel eingebracht ist, welches bei einer Rissbildung in der zumindest einen Dämpfungsschicht (3) an der Stirnfläche (5) optisch nachweisbar austritt.

## Beschreibung

Die vorliegende Erfindung betrifft ein Hülsenlager gemäß dem Oberbegriff des Anspruchs 1. Des Weiteren betrifft die Erfindung eine landwirtschaftliche Arbeitsmaschine gemäß dem Oberbegriff Anspruches 7.

Hülsenlager der eingangs genannten Art kommt zum elastischen Verbinden zweier Komponenten oder Baugruppen zur Anwendung, beispielsweise als Kabinenlager zur Schwingungsisolation einer durch einer landwirtschaftlichen Arbeitsmaschine erzeugten maschinentypischen Schwingung von einem Maschinenrahmen auf eine Kabine. Ein solches Hülsenlager weist eine äußere Lagerhülse und eine innere Lagerhülse auf, zwischen denen zumindest eine Dämpfungsschicht angeordnet ist, welche die äußere Lagerhülse und die innere Lagerhülse miteinander mechanisch koppelt.

Die von dem Hülsenlager aufgenommenen mechanischen Belastungen führen im Verlauf der Einsatzdauer zu einem Verschleiß der aus zumindest einem Elastomer bestehenden Dämpfungsschicht, was sich in einer durchgängigen Rissbildung innerhalb der Dämpfungsschicht äußert, welche zum Versagen des Hülsenlagers führt. Um den Verschleißzustand zu beurteilen, erfolgt eine oberflächliche Sichtprüfung oberflächlich an einer der Stirnflächen der Dämpfungsschicht. Da es aufgrund der mechanischen Belastung zu einer Rissbildung bzw. einem Abrieb an der Oberfläche kommt, wird dies bei oberflächlicher Sichtprüfung oftmals bereits als kritischer Verschleißzustand angesehen, obwohl das vermeintliche Schadensbild noch keinen Rückschluss auf den tatsächlichen Verschleißzustand des Hülsenlagers zulässt. Entsprechend wird das Hülsenlager vorsorglich getauscht, obwohl dessen Lebensdauer noch nicht überschritten ist.

Aus der Patentschrift DE 28 48 07 C ist ein Transmissionslager bekannt, an welchem ein Behältnis angeordnet ist, dass eine Signalflüssigkeit enthält, die einerseits Riechstoffe und zusätzlich einen Farbstoff enthält. Das Heißlaufen des Lagers führt zu einem Öffnen des Behältnisses, beispielsweise durch das Schmelzen eines Verschlusses, so dass neben dem Riechstoff zusätzlich der Farbstoff freigesetzt wird. Der Riechstoff liefert dabei den Hinweis auf einen Gefahrenzustand, während der Farbstoff die Lokation des betroffenen Lagers erleichtern soll. Das Austreten des Riech- und Farbstoffes tritt somit erst im eingetretenen Schadensfall auf.

Aufgabe der vorliegenden Erfindung ist es, ein Hülsenlager der eingangs genannten Art derart weiterzubilden, dass der tatsächliche Verschleißzustand des Hülsenlagers von außen erkennbar ist.

Diese Aufgabe wird erfindungsgemäß durch ein Hülsenlager gemäß dem Anspruch 1 sowie eine landwirtschaftliche Arbeitsmaschine gemäß dem Anspruch 7 gelöst.

Vorteilhafte Weiterbildungen der Erfindung sind Gegenstand der Unteransprüche.

Gemäß dem Anspruch 1 wird ein Hülsenlager vorgeschlagen, welches eine äußere Lagerhülse und eine innere Lagerhülse aufweist, zwischen denen zumindest eine Dämpfungsschicht angeordnet ist, die aus wenigstens einem Elastomer besteht, wobei eine Stirnfläche des Hülsenlagers zumindest partiell einsehbar ist, wobei in zumindest einem Abschnitt des die zumindest eine Dämpfungsschicht bildendenden Elastomers ein Indikatormittel eingebracht ist, welches bei einer Rissbildung in der zumindest einen Dämpfungsschicht an der Stirnseite optisch nachweisbar austritt. Hierdurch wird erreicht, dass durch eine einfache Sichtprüfung auf den tatsächlichen Verschleißzustand des Hülsenlagers respektive der Dämpfungsschicht geschlossen werden kann, da ein Austreten des Indikatormittels erst dann auftritt, wenn sich die verschleißbedingte Rissbildung durch die Dämpfungsschicht fortgesetzt hat. Unter einem in das Elastomer eingebrachten Indikatormittel ist eine stoffliche Verbindung zwischen dem Indikatormittel und dem Elastomer zu verstehen. Die Einbringung ermöglicht eine vorgebbare Positionierung des Indikatormittels in der zumindest einen Dämpfungsschicht. Somit ist der Ort des Austretens des Indikatormittels an unterschiedliche last- bzw. Einsatzgebiete anpassbar. Eine Ausbildung eines Hohlraums in der zumindest einen Dämpfungsschicht selbst wie auch in der Außenhülse oder Innenhülse ist nicht sinnvoll, da dadurch die Lagereigenschaften des Hülsenlagers eingeschränkt würden. Grundsätzlich ist die zumindest Dämpfungsschicht an ihren Einsatzort bzw. Einbringungsraum angepasst ausgebildet. Die Dämpfungsschicht kann beispielsweise ringförmig ausgebildet sein.

Gemäß einer Weiterbildung kann das Indikatormittel als ein Farbstoff ausgeführt sein. Das Austreten des Farbstoffs signalisiert unmittelbar, dass ein Verschleißzustand vorliegt, der zu einem Versagen des Hülsenlagers führt.

Alternativ oder zusätzlich kann das Indikatormittel einen fluoreszierenden Inhaltsstoff enthalten. So kann eine Sichtprüfung beispielsweise mittels einer Licht im kurzwelligen Bereich, insbesondere ultraviolettes Licht, emittierenden Lichtquelle vorgenommen werden, um bei dem aus dem Hülsenlager ausgetretenen Elastomerpartikeln zwischen einem oberflächlichen Abrieb und dem Austreten von Elastomerpartikeln aus dem Inneren der Dämpfungsschicht unterscheiden zu können.

Gemäß einer Weiterbildung kann das Indikatormittel durch Wärmeentwicklung aktivierbar sein. Aufgrund der Rissbildung im Inneren der Dämpfungsschicht kommt es zu erhöhter Haftreibung und damit zu einer verstärkten Erwärmung. Diese kann genutzt werden, um das Indikatormittel in einer Weise zu aktivieren, so dass es an den Stirnflächen des Hülsenlagers austreten kann, beispielsweise durch eine Verflüssigung.

Gemäß einer bevorzugten Weiterbildung kann die zumindest eine Dämpfungsschicht aus einem ersten Elastomer bestehen, in welches ein zweites mit dem Indikatormittel versehenes Elastomer eingebettet ist. Hierbei kann sich das zweite Elastomer lediglich durch eine abweichende Farbgebung vom ersten Elastomer unterscheiden. Auf diese Weise bleiben die Lager- und Dämpfungseigenschaften unverändert erhalten, jedoch führt die verschleißbedingte Rissbildung dazu, dass neben dem ersten Elastomer auch das zweite, farblich abweichende Elastomer austritt, wodurch der Verschleißzustand eindeutig identifizierbar ist. Denkbar ist auch der Einsatz verschiedener Elastomere, die sich durch unterschiedliche Dämpfungseigenschaften auszeichnen können.

Insbesondere kann der Abschnitt innerhalb der zumindest einen Dämpfungsschicht, in welchen das Indikatormittel eingebracht ist, in Abhängigkeit von der Art der mechanischen Belastung der Dämpfungsschicht in dem Hülsenlager positioniert sein. Entsprechend ihrer in den unterschiedlichen Anwendungsfällen des Hülsenlagers auftretenden Hauptbelastung, axial, radial, kardanisch oder durch Torsion, und dem dadurch bedingten Verschleißverlauf, kann die Positionierung des Abschnitts innerhalb der zumindest einen Dämpfungsschicht unterschiedlich gewählt werden. Dabei kann die Positionierung des zumindest einen Abschnitts innerhalb der Dämpfungsschicht symmetrisch als auch asymmetrisch in Bezug auf die Geometrie des Hülsenlagers erfolgen. Weiterhin kann die Positionierung zumindest zweier Abschnitte innerhalb der Dämpfungsschicht symmetrisch als auch asymmetrisch in Bezug auf die Anordnung der zumindest zwei Abschnitte zueinander erfolgen.

Weiterhin betrifft die vorliegende Erfindung eine landwirtschaftliche Arbeitsmaschine.

Gemäß dem Anspruch 7 wird eine landwirtschaftliche Arbeitsmaschine mit durch zumindest ein Hülsenlager elastisch verbundenen Komponenten vorgeschlagen, wobei das zumindest eine Hülsenlager nach einem der Ansprüche 1 bis 6 ausgebildet ist. Die Verwendung eines solchen Hülsenlagers hat den Vorteil, dass ein vorzeitiger und damit unnötiger Austausch vermieden werden kann, da bei einer routinemäßigen Sichtprüfung der Verschleißzustand ohne weiteres erkennbar ist.

Bevorzugt kann die landwirtschaftliche Arbeitsmaschine als Traktor, selbstfahrender Mähdrescher oder Feldhäcksler ausgebildet sein. An diesen Arbeitsmaschinen kommen Hülsenlager vielfach zur Anwendung.

Insbesondere können die verbundenen Komponenten als Förderboden, als Bauteile einer oszillierend angetrieben Reinigungsvorrichtung und/oder Abscheidevorrichtung des Mähdreschers ausgebildet sein. So werden beispielsweise bei der Reinigungsvorrichtung Schubstangen, mittels derer eine oszillierende Antriebsbewegung auf einen Siebrahmen durch Hülsenlager auf einem diese miteinander koppelnden Bolzen oder Welle gelagert. Eine Anlenkung eines Obersiebs der Reinigungsvorrichtung weist ebenfalls ein oder mehrere Hülsenlager auf. Ein weiterer Anwendungsfall können Schwingen zur Lagerung von Förder- und Rücklaufboden des Mähdreschers sein. Die Hülsenlager verbinden die jeweiligen Schwingen mit dem Förder- bzw. Rücklaufboden. Derartig verwendete Hülsenlager sind insbesondere Belastungen durch Torsion sowie Querneigung ausgesetzt.

Weiterhin können die verbundenen Komponenten als eine Kabine und ein Maschinenrahmen der Arbeitsmaschine ausgebildet sein. So sind Hülsenlager, die der Lagerung der Kabine dienen neben einer axialen Belastung einer Belastung durch Nickbewegungen der Kabine ausgesetzt.

Die vorliegende Erfindung wird nachstehend anhand eines in den Zeichnungen dargestellten Ausführungsbeispieles näher erläutert.

Es zeigen:
- Fig. 1: eine schematische Darstellung eines Hülsenlagers in Seitenansicht;
- Fig. 2a, 2b: eine Schnittansicht des Hülsenlagers gemäß Fig. 1;
- Fig. 3: eine schematische Ansicht einer landwirtschaftlichen Arbeitsmaschine;
- Fig. 4: eine Explosionsdarstellung einer Siebrahmenaufhängung.

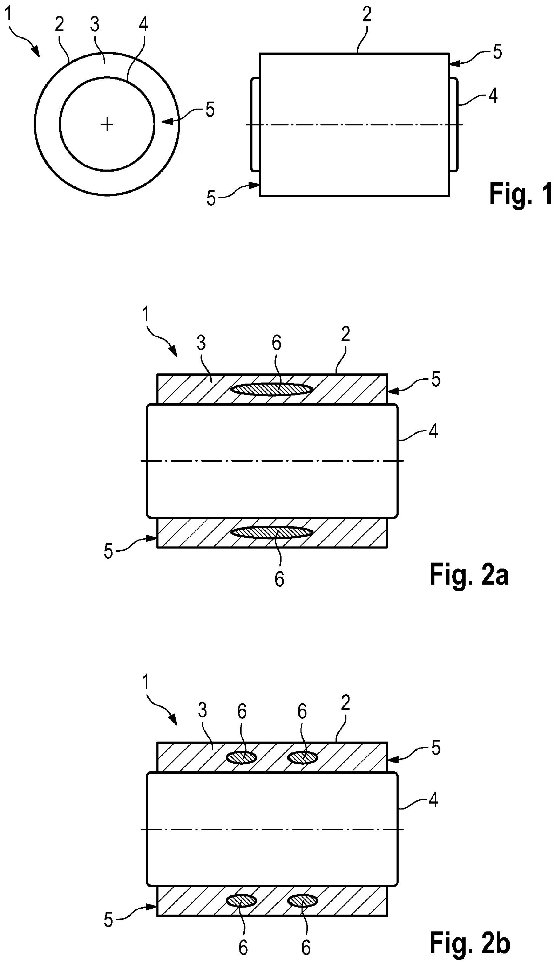

In Fig. 1 zeigt eine schematische Darstellung eines Hülsenlagers 1 in Seitenansicht sowie in einer Ansicht von oben. Das Hülsenlager 1 ist als Verbundbauteil ausgebildet und umfasst eine Außenhülse 2 sowie zumindest eine Innenhülse 4, zwischen denen zumindest eine ringförmige Dämpfungsschicht 3 angeordnet ist, die aus wenigstens einem Elastomer besteht. Mit Bezugszeichen 5 ist eine Stirnfläche bezeichnet der Dämpfungsschicht 3 bezeichnet, die, in Abhängigkeit von der Bauform des Hülsenlagers 1, zumindest teileweise einsehbar ist. Die Außenhülse 2 kann an ihren äußeren Enden gebördelt ausgeführt sein, so dass die Stirnfläche 5 der Dämpfungsschicht 3 abschnittsweise von einem sich in radialer Richtung erstreckenden Abschnitt der Außenhülse 2 umgriffen wird.

In Fig. 2a und Fig. 2b ist jeweils eine Schnittansicht des Hülsenlagers 1 dargestellt. Das in Fig. 2a dargestellte Hülsenlager 1 zeigt eine erste Ausführungsform der Dämpfungsschicht 3. Dabei ist in zumindest einem, zumindest abschnittsweise umlaufenden Abschnitt 6 des die zumindest eine Dämpfungsschicht 3 bildendenden Elastomers ein Indikatormittel eingebracht. Dabei handelt es sich bevorzugt um eine Beimischung in das Elastomer, welches als Farbstoff oder fluoreszierender Inhaltsstoff ausgeführt. Fig. 2b zeigt eine zweite Ausführungsform, gemäß der zwei Abschnitte 6 vorgesehen sind, in die ein Indikatormittel eingebracht ist. Der Abschnitt 6 oder die Abschnitte 6 können auch aus einem eingebetteten Elastomer bestehen, welches sich zumindest durch eine abweichende Einfärbung auszeichnet. D.h., dass Elastomer des Abschnitts 6 oder der Abschnitte 6 ist identisch mit dem diese einschließenden Elastomer. Es können aber auch unterschiedliche Elastomere zum Einsatz kommen.

Die Positionierung des zumindest einen Abschnitts 6 innerhalb der Dämpfungsschicht kann symmetrisch als auch asymmetrisch in Bezug auf die Geometrie des Hülsenlagers 1 erfolgen. Weiterhin kann die Positionierung zumindest zweier Abschnitte 6 innerhalb der Dämpfungsschicht 3 symmetrisch als auch asymmetrisch in Bezug auf die Anordnung der zumindest zwei Abschnitte 6 zueinander erfolgen.

Aufgrund dynamischer Belastungen kommt es im Laufe der Zeit in dem Hülsenlager 1 zu einer Rissbildung in der Dämpfungsschicht 3. Eine Überprüfung des Hülsenlagers 1 erfolgt dabei im Allgemeinen jedoch nur im Rahmen einer Sichtprüfung der zumindest teilweise einsehbaren Stirnflächen 5 der Dämpfungsschicht 3. Die an der Oberfläche der Dämpfungsschicht 3 auftretenden Risse bzw. der Abrieb im Bereich des Hülsenlagers 1 stellt kein zuverlässiges Kriterium dar, um den tatsächlichen Verschleißzustand abschließend beurteilen zu können. Ein Totalausfall des Hülsenlagers 1 stellt sich insbesondere dann ein, wenn die Dämpfungsschicht 3 einen in axialer Richtung zumindest nahezu durchgehend verlaufenden Riss aufweist. Dennoch werden die Hülsenlager 1 aufgrund des oberflächlichen Schadenbildes ausgetauscht, obwohl deren Verschleißzustand einen Austausch noch nicht erforderlich werden lässt.

Um einen solchen Riss, der zu einem Totalausfall des Hülsenlagers 1 führen kann, von außen sichtbar zu machen, kommt das in das Elastomer der Dämpfungsschicht 3 eingebrachte Indikatormittel zum Tragen. Erstreckt sich ein Riss von dem zumindest einen Abschnitt 6 bis zu den Stirnflächen 5 des Hülsenlagers 1, so kommt es zu einem Austritt des Indikatormittels an der oder den Stirnflächen 5. Aufgrund der Färbung oder wegen der fluoreszierenden Eigenschaft des Indikatormittels, ist das Austreten des Indikatormittels aus dem Inneren der Dämpfungsschicht 3 optisch nachweisbar. Auf diese Weise kann ein erforderlicher Austausch des Hülsenlagers 1 zu einem Zeitpunkt vorgenommen werden, zu welchem mit einem tatsächlichen Ausfall des Hülsenlagers 1 zu rechnen ist. Denkbar ist auch ein Rissverlauf in im Wesentlichen radialer Richtung, so dass das Indikatormittel im Bereich zwischen der Dämpfungsschicht 3 und der Außenhülse 2 oder Innenhülse 4 nach außen gelangt und an der Stirnfläche 6 austritt.

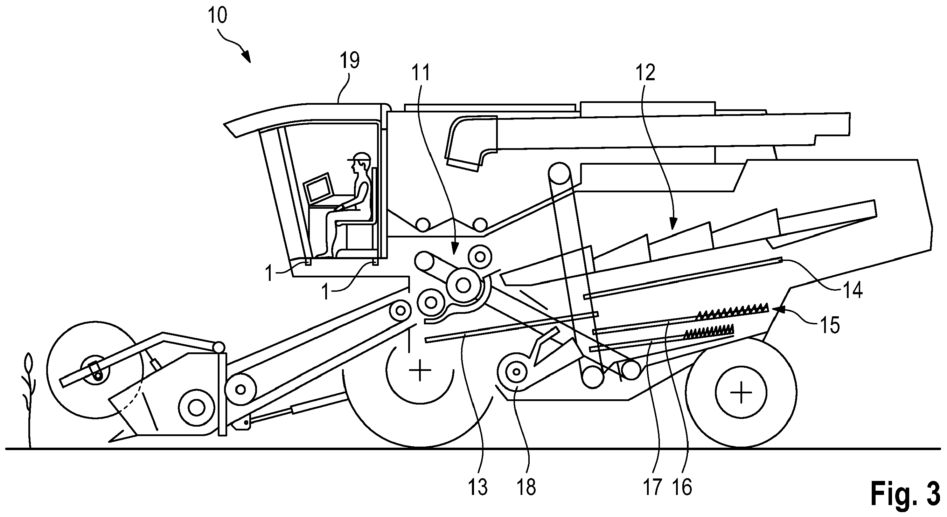

In Fig. 3 ist eine als selbstfahrender Mähdrescher 10 ausgeführte landwirtschaftliche Arbeitsmaschine mit einer nach dem Tangentialflussprinzip arbeitenden Drescheinrichtung 11 und einem dahinter angeordneten Hordenschüttler 12 als Abscheidevorrichtung dargestellt. Anstelle des Hordenschüttlers 12 kann auch eine nach dem Axialflussprinzip arbeitende Abscheideeinrichtung in Form zumindest eines Abscheiderotors zur Anwendung kommen. Unterhalb der Drescheinrichtung 11 befindet sich ein oszillierender Förderboden 13, der ausgedroschenes Erntegut aufnimmt und in Richtung einer Reinigungsvorrichtung 15 transportiert und an diese abgibt. Unterhalb des Hordenschüttlers 12 befindet sich ein ebenfalls oszillierender Rücklaufboden 14, der von dem Hordenschüttler 12 abgegebenes Erntegut an den Förderboden 13 übergibt. Die Reinigungsvorrichtung 15 besteht aus zwei übereinander angeordneten Sieben 16, 17 und einem Gebläse 18. Der Mähdrescher 10 weist eine Kabine 19, die durch eine Anordnung von Hülsenlagern 1 auf einem Rahmenabschnitt des Mähdreschers 10 gelagert ist.

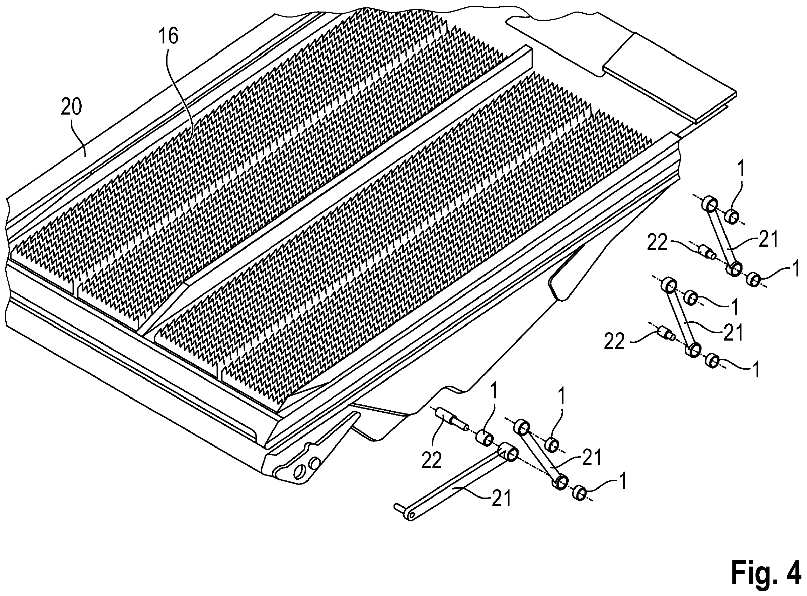

Fig. 4 zeigt eine Explosionsdarstellung einer Siebrahmenaufhängung, die der Aufnahme der Siebe 16 und 17 der Reinigungsvorrichtung 15 dient. Die Siebrahmenaufhängung weist einen Siebrahmen 20 auf, welcher durch Schubstangen 21 mit Aktoren gekoppelt ist, welche eine oszillierende Bewegung erzeugen, die auf den Siebrahmen 20 übertragen wird. Die Schubstangen 21 weisen endseitig ein Lagerauge auf, in welchem jeweils ein Hülsenlager 1 angeordnet ist. Die Hülsenlager 1 werden mit ihrer Innenhülse 4 auf Bolzen 22 aufgeschoben, um beispielsweise zwei Schubstangen 21 miteinander gelenkig zu verbinden.

Der Mähdrescher 10 weist üblicherweise seitliche Verkleidungselemente auf, die um eine horizontal verlaufende Schwenkachse hochschwenkbar sind, so dass die dahinter liegenden Arbeitsaggregate einsehbar sind. Auf diese Weise sind auch die Hülsenlager 1 respektive zumindest eine ihrer Stirnflächen 5 einer optischen Verschleißkontrolle zugänglich.

### Bezugszeichenliste

- 1: Hülsenlager
- 2: Außenhülse
- 3: Dämpfungsschicht
- 4: Innenhülse
- 5: Stirnfläche
- 6: Abschnitt

- 10: Mähdrescher
- 11: Drescheinrichtung
- 12: Hordenschüttler
- 13: Förderboden
- 14: Rücklaufboden
- 15: Reinigungsvorrichtung
- 16: Sieb
- 17: Sieb
- 18: Gebläse
- 19: Kabine
- 20: Siebrahmen
- 21: Schubstangen
- 22: Bolzen

## Patentansprüche

1. Hülsenlager (1), welches eine Außenhülse (2) und eine Innenhülse (4) aufweist, zwischen denen zumindest eine Dämpfungsschicht (3) angeordnet ist, die aus wenigstens einem Elastomer besteht, wobei eine Stirnfläche (5) des zumindest einen Hülsenlagers (1) einsehbar ist, **dadurch gekennzeichnet, dass** in zumindest einem Abschnitt (6) des die zumindest eine Dämpfungsschicht (3) bildendenden Elastomers ein Indikatormittel eingebracht ist, welches bei einer Rissbildung in der zumindest einen Dämpfungsschicht (3) an der Stirnfläche (5) optisch nachweisbar austritt.

2. Hülsenlager (1) nach Anspruch 1, **dadurch gekennzeichnet, dass** das Indikatormittel als ein Farbstoff ausgeführt ist.

3. Hülsenlager (1) nach Anspruch 1 oder 2, **dadurch gekennzeichnet, dass** das Indikatormittel einen fluoreszierenden Inhaltsstoff enthält.

4. Hülsenlager (1) nach einem der Ansprüche 1 bis 3, **dadurch gekennzeichnet, dass** das Indikatormittel durch Wärmeentwicklung aktivierbar ist.

5. Hülsenlager (1) nach einem der Anspruche 1 bis 4, **dadurch gekennzeichnet, dass** die zumindest eine Dämpfungsschicht (3) aus einem ersten Elastomer besteht, in welches ein zweites mit dem Indikatormittel versehenes Elastomer eingebettet ist.

6. Hülsenlager (1) nach einem der Anspruche 1 bis 4, **dadurch gekennzeichnet, dass** der zumindest eine Abschnitt (6) in Abhängigkeit von der Art der mechanischen Belastung der zumindest einen Dämpfungsschicht in dem Hülsenlager (1) positioniert ist.

7. Landwirtschaftliche Arbeitsmaschine (10) mit durch zumindest ein Hülsenlager (1) elastisch verbundenen Komponenten, **dadurch gekennzeichnet, dass** das zumindest eine Hülsenlager (1) nach einem der Ansprüche 1 bis 6 ausgebildet ist.

8. Landwirtschaftliche Arbeitsmaschine (10) nach Anspruch 7, **dadurch gekennzeichnet, dass** die landwirtschaftliche Arbeitsmaschine als Traktor, selbstfahrender Mähdrescher (10) oder Feldhäcksler ausgebildet ist.

9. Landwirtschaftliche Arbeitsmaschine (10) nach Anspruch 8, **dadurch gekennzeichnet, dass** die verbundenen Komponenten als Förderboden (13, 14), als Bauteile (20) einer oszillierend angetrieben Reinigungsvorrichtung (15) und/oder Abscheidevorrichtung (12) des Mähdreschers (10) ausgebildet sind.

10. Landwirtschaftliche Arbeitsmaschine (10) nach Anspruch 7 bis 9, **dadurch gekennzeichnet, dass** die verbundenen Komponenten als eine Kabine (19) und ein Maschinenrahmen der Arbeitsmaschine (10) ausgebildet sind.
